Europäisches Patentamt

European Patent Office

Office européen des brevets

(19)

(11)  **EP 1 047 065 B1**

(12)  **EUROPEAN PATENT SPECIFICATION**

(45) Date of publication and mention
of the grant of the patent:
**22.10.2003   Bulletin 2003/43**

(51) Int Cl.⁷: **G11B 20/10**, G11B 20/24,
G11B 7/00, G11B 7/13

(21) Application number: **00303477.4**

(22) Date of filing: **25.04.2000**

(54) **Device and method for reducing crosstalk and intersymbol interference**

Vorrichtung und Verfahren zur Reduzierung von Übersprechen und Nachbarsymbolinterferenz

Dispositif et méthode de réduction de la diaphonie et de l'interférence intersymbole

(84) Designated Contracting States:
**DE FR GB NL**

(30) Priority:  **22.04.1999   KR 9914488**

(43) Date of publication of application:
**25.10.2000   Bulletin 2000/43**

(73) Proprietor: **SAMSUNG ELECTRONICS CO., LTD.**
**Suwon-city, Kyungki-do 441-373 (KR)**

(72) Inventors:
• **Kim, Tae-kyung, 3-1002 Samsung 2-cha Apt.**
**Suwon-city, Kyungki-do (KR)**
• **Chung, Chong-sam, 835-1306 Hyundai Apt.**
**Seongnam-city, Kyungki-do (KR)**
• **Ahn, Young-man,**
**931-901 Youngtongjigu Taeyoung Apt**
**Suwon-city, Kyungki-do (KR)**
• **Seo, Hae-jung**
**Seongnam-city, Kyungki-do (KR)**

(74) Representative: **Chugg, David John et al**
**Appleyard Lees,**
**15 Clare Road**
**Halifax, West Yorkshire HX1 2HY (GB)**

(56) References cited:
**US-A- 5 347 504          US-A- 5 740 141**

• **PATENT ABSTRACTS OF JAPAN vol. 1998, no. 14, 31 December 1998 (1998-12-31) -& JP 10 241194 A (SONY CORP), 11 September 1998 (1998-09-11) -& US 6 198 711 B1 (FUJITA ET AL) 6 March 2001 (2001-03-06)**
• **PATENT ABSTRACTS OF JAPAN vol. 017, no. 408 (P-1582), 29 July 1993 (1993-07-29) & JP 05 073917 A (HITACHI LTD), 26 March 1993 (1993-03-26)**
• **PATENT ABSTRACTS OF JAPAN vol. 009, no. 308 (P-410), 4 December 1985 (1985-12-04) & JP 60 138748 A (TOSHIBA KK), 23 July 1985 (1985-07-23)**
• **PATENT ABSTRACTS OF JAPAN vol. 011, no. 252 (P-605), 15 August 1987 (1987-08-15) & JP 62 057134 A (MATSUSHITA ELECTRIC IND CO LTD), 12 March 1987 (1987-03-12)**
• **PATENT ABSTRACTS OF JAPAN vol. 1996, no. 08, 30 August 1996 (1996-08-30) & JP 08 102081 A (HITACHI LTD), 16 April 1996 (1996-04-16)**
• **PATENT ABSTRACTS OF JAPAN vol. 1998, no. 12, 31 October 1998 (1998-10-31) -& JP 10 198964 A (SONY CORP), 31 July 1998 (1998-07-31)**
• **PATENT ABSTRACTS OF JAPAN vol. 012, no. 334 (P-756), 8 September 1988 (1988-09-08) & JP 63 096744 A (TEAC CO), 27 April 1988 (1988-04-27)**
• **PATENT ABSTRACTS OF JAPAN vol. 012, no. 114 (P-688), 12 April 1988 (1988-04-12) & JP 62 243138 A (HITACHI LTD), 23 October 1987 (1987-10-23)**

EP 1 047 065 B1

**Description**

The present invention relates to the field of signal reproduction in an optical disk, and more particularly, to a device and method of reducing crosstalk between neighboring tracks, which increases as the track pitch becomes narrower for high recording density, and interference between adjacent marks, by using multiple-divided detection signals from an optical detector.

The recording and/or reproducing apparatus in an optical disk is a kind of low pass filter due to the optical transfer function (OTF) of an objective lens and the responsive characteristic of recording materials. If the recording density increases, the recording/reproducing apparatus approaches the upper limit value of a radio frequency band in which a recording data is recorded, so that the respective waveforms interfere with each other to generate an error when adjacent marks are reproduced, this phenomenon is called intersymbol interference (ISI). Further, a reduction in track pitch for increasing recording density may make the degradation of a reproducing signal worse due to mutual interference between neighboring tracks. The degree of signal degradation by neighboring tracks is defined as crosstalk.

US 6,198,711 describes an equalizer for an optical reproducing apparatus, for performing an equalizing operation in accordance with the spatial frequency without needing an electrical equalizer. JP 10198964 describes a detector divided into a plurality of light receiving areas, with the detection outputs of these areas being processed by a crosstalk removal operation. JP 60138748 describes a photodetector divided into a peripheral part and a center part, with both outputs of the parts being added with weighting so as to extract a reproduction signal.

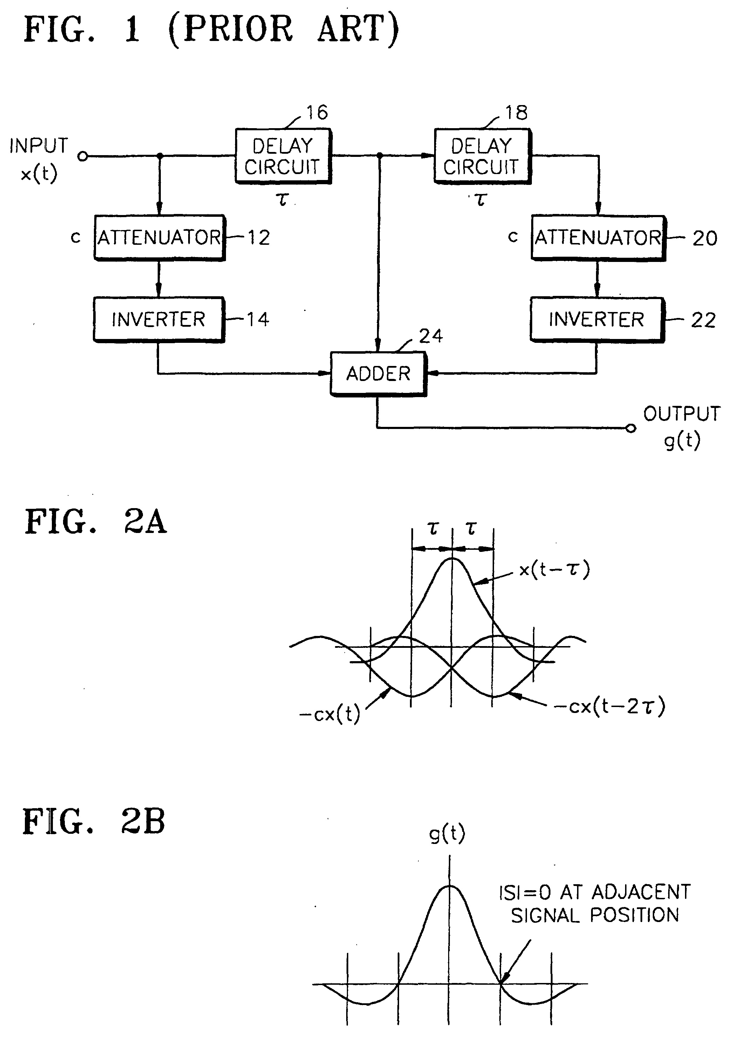

In the conventional art, a waveform equalizer is used for reducing ISI. The simplest cosine equalizer using two delay circuits is shown in Figure 1. Referring to Figure 1, a single pulse input from an equalizer and the coefficient of attenuators 12 and 20 are denoted by x(t) and c, respectively. Also, the delay time of delay circuits 16 and 18 is denoted by $\tau$, and the output of the equalizer is denoted by g(t). A reproducing signal for a mark recorded on an optical disk shows the characteristic of a low pass filter. The requirement for creating no ISI is that the output at the reproducing position of another pulse should be "zero". In other words, the requirement for ISI to equal 0 in a reproducing waveform g(t) is given below:

$$g(nT) = 1 (n = 0)$$

$$= 0 (n \neq 0) \tag{1}$$

If the above requirement is expressed in terms of a frequency domain, it is as follows:

$$\sum_{k=\infty}^{\infty} G(jw + j2\frac{\pi}{T}k) = G_0 (= cons\tan t) \qquad ...(2)$$

were $|\omega| < \pi/T$, k=0, $\pm$1, $\pm$2, ..., and the function G(j$\omega$) is the Fourier transform of g(t). This means that ISI=0 if what divides and overlaps G(j$\omega$) by the angular frequency width of 2$\pi$/T shows the characteristic of an ideal low pass filter. In Figure 1, the attenuation coefficient c of the attenuators 12 and 20 and the delay time $\tau$ of the delay circuits 16 and 18 are appropriately selected, it is possible to remove ISI by sharpening the waveform of an input signal. The equalizer output g(t) provided from an adder 24 is represented as follows:

$$g(t) = x(t - \tau) - c\{x(t) + x(t - 2\tau)\} \tag{3}$$

Figure 2A shows the reproducing positions of the output signal -cx(t) of an inverter 14, the output signal of x(t-$\tau$) of the delay circuit 16, and the output signal - cx(t-2$\tau$) of an inverter 22. Figure 2B shows the waveform of the equalizer output g(t), from which ISI is removed, provided from the adder 24. As a waveform equalizer having delay circuits is used to reduce ISI as shown in Figure 1, a conventional optical recording/reproducing apparatus has a problem in that adjacent mark signals have a predetermined time delay, so that the reproducing signal of a currently recorded mark cannot be detected in real time.

With a view to solve or reduce the above problem, it is an aim of embodiments of the present invention to provide a device for reducing intersymbol interference (ISI) by using multiple-divided detection signals from an optical detector instead of a waveform equalizer. optically minimize crosstalk and ISI into multiple-divided signals and operating the same.

According to a first aspect of the invention, there is provided a device for reducing crosstalk and intersymbol interference suitable for use in a recording/reproducing apparatus of an optical disk, the device comprising: a detector (202) for detecting an optical signal reflected from the optical disk by dividing the optical signal into the central and peripheral parts in the radial direction of the optical disk, and the central and peripheral parts in the radial direction among peripheral parts in the tangential direction to provide central and peripheral detection signals of the radial direction, and central and peripheral detection signals of the radial direction among the peripheral parts of the tangential direction; and a correcting unit for generating a first signal by gain-controlling the peripheral detection signal of the radial direction as a first gain value to operate first gain-controlled detection signal and the central detection signal of the radial direction, generating a second signal by gain-controlling the peripheral detection signal of the radial direction among the peripheral parts of the tangential direction as the first gain value and by gain-controlling the values of operating second gain-controlled detection signal and the central detection signal of the radial direction among the peripheral parts of the tangential direction as a second gain value, and operating the first and second signals to provide a signal in which crosstalk and intersymbol interference are corrected, wherein the correcting unit comprises a first gain controller (204) for multiplying a first gain value adjusted to minimize crosstalk by the peripheral detection signal of the radial direction to provide first gain-controlled detection signal; and a first adder (206) for adding the first gain-controlled detection signal and the central detection signal of the radial direction to provide a first signal, and wherein the detector comprises an optical detector including a first light-receiving unit for receiving the central part of incident light, a second light-receiving unit disposed on at least one side of the first light-receiving unit for receiving the peripheral part of the incident light independently from the first light-receiving unit, a third light-receiving unit for receiving the central incident light of the radial direction among the peripheral parts of the tangential direction, a fourth light-receiving unit for receiving the peripheral incident light of the radial direction among the peripheral parts of the tangential direction.

The first light-receiving unit preferably has a predetermined size so as to form a central part within the range of about 10-100% of incident light.

The detector may comprise an optical element for directly transmitting the central part of incident light and diffracting the peripheral part of the incident light at a predetermined angle to divide incident light into the light of central and peripheral parts with regard to the radial direction of an optical disk and the central and peripheral light of the radial direction among the peripheral parts of the tangential direction, and a plurality of optical detectors for photoelectrically converting each of the light diverged by the optical element independently.

The correcting unit preferably comprises: a second gain controller for multiplying the central detection signal of the radial direction among the peripheral parts of the tangential direction by the first gain value to provide the second gain-controlled detection signal; a second adder for adding the second gain-controlled detection signal and the peripheral detection signal of the radial direction among the peripheral parts of the tangential direction; a third gain controller for multiplying the result of the second adder by a second gain value adjusted to minimize intersymbol interference to provide a second signal; and a third adder for adding the first and second signals to each other to provide a signal in which crosstalk and intersymbol interference are corrected.

According to another aspect there is provided a method of reducing crosstalk and intersymbol interference in the recording/reproducing apparatus of an optical disk, the method comprising the steps of: (a) detecting by dividing an optical signal reflected from the optical disk into central and peripheral parts in the radial direction of the optical disk, and central and peripheral parts of the radial direction among the peripheral parts of the tangential direction to provide central and peripheral detection signals of the radial direction, and central and peripheral detection signals of the radial direction among the peripheral parts of the tangential direction; and (b) generating a first signal by controlling the peripheral detection signal of the radial direction as a first gain value to operate the gain-controlled detection signal and the central detection signal of the radial direction, generating a second signal by controlling the peripheral detection signal of the radial direction among the peripheral parts of the tangential direction as the first gain value and by gain-controlling the value of operating the gain-controlled detection signal of the radial direction among the peripheral parts of the tangential direction and the central detection signal of the radial direction among the peripheral parts of the tangential direction as a second gain value, and operating the first and second signals to provide a signal in which crosstalk and intersymbol interference are corrected, wherein the first gain value is adjusted to minimize crosstalk caused by neighboring tracks, and the second gain value is adjusted to minimize intersymbol interference by adjacent marks, and wherein step (b) comprises the steps of: (b1) multiplying the peripheral detection signal of the radial direction by a first gain value adjusted to minimize crosstalk to provide first gain-controlled detection signal; (b2) adding the first gain-controlled detection signal and the central detection signal of the radial direction to provide a first signal.

Preferably, the step (b) comprises the steps of: (b3) multiplying the central detection signal of the radial direction among the peripheral parts of the tangential direction by the first gain value to provide second gain-controlled detection signal; (b4) adding the second gain-controlled detection signal and the peripheral detection signal among the peripheral parts of the tangential direction to provide addition result; (b5) multiplying the addition result by a second gain value adjusted to minimize intersymbol interference to provide a second signal; and (b6) adding the first and

EP 1 047 065 B1

second signal to each other.

For a better understanding of the invention, and to show how embodiments of the same may be carried into effect, reference will now be made, by way of example, to the accompanying diagrammatic drawings in which:

Figure 1 is a block diagram of a conventional cosine equalizer;

Figures. 2A and 2B are diagrams showing the reproducing positions of the reproducing signal by adjacent marks and the output signal of an equalizer shown in Figure 1;

Figure 3 is a circuit diagram of a device for reducing intersymbol interference (ISI);

Figure 4 is a diagram showing the tangential direction of a disk and optical detector;

Figure 5 is a diagram showing a reproducing signal detected from an optical detector shown in Figure 3;

Figure 6 is a diagram showing a signal s1+ ξ (s2+s3), in which ISI is corrected, provided from an adder, and the detection signal s1+s2+s3 of an optical detector;

Figure 7 is a diagram showing jitter value according to ISI correction gain coefficient ξ shown in Figure 3;

Figure 8 is a diagram showing the eye pattern of a signal s1+s2+s3 not subjected to equalization;

Figure 9 is a diagram showing the eye pattern of a signal s1+s2+s3 subjected to equalization;

Figure 10 is a diagram showing the eye pattern of the output signal s1+3(s2+s3) from an adder shown in Figure 3 when ξ = 3;

Figure 11 is a circuit diagram for ISI and crosstalk reducing device according to an embodiment of the present invention;

Figure 12 is a diagram showing the configuration of the hologram used in a light receiving unit when crosstalk exists;

Figures. 13A and 13B each are diagrams showing jitter values according to ISI correction gain coefficient ξ and crosstalk correction gain coefficient κ when crosstalk exists;

Figure 14 is a diagram showing the eye pattern of a detection signal rin+rout1+ rout2 for the radial direction of an optical detector not subjected to equalization for understanding of the present invention;

Figure 15 is a diagram showing the eye pattern of a detection signal rin+rout1+ rout2 for the radial direction of an optical detector subjected to equalization to aid in the understanding of the present invention; and

Figure 16 is a diagram showing the eye pattern of an output signal rin+9(rout1+ rout2)+4(tin+9tout) from a third adder shown in Figure 11 when ξ = 4 and κ = 9.

At the outset, in an optical disk recording/reproducing apparatus for recording arbitrary information on an optical disk with a focusing spot by laser beams and an objective lens or reproducing the recorded information, recording capacity is determined by the focusing spot size D which is in turn determined by the wavelength λ of laser beams and the numerical aperture (NA) of an objective lens as follows:

$$D \; \alpha \; \lambda \; / \; NA \tag{4}$$

As the focusing spot size is determined, assuming that the shortest length of marks recorded on a disk is $P_L$, the shortest mark length needs to be determined so that interference between marks does not affect a reproducing signal.

$$P_L \geq \frac{1}{2} \frac{\lambda}{NA} \tag{5}$$

4

In other words, when the above requirement in formula (5) is met, ISI can be reduced. In the case of a compact disk (CD) using an objective lens having a laser light source of 780 nm and a NA of 0.45, the shortest mark has a length of 0.83 μm which is approximate to the requirement in formula (5) that $P_L$=0.87 μm. However, in the case of a digital versatile disk (DVD), the shortest mark has a length of 0.4 μm which is largely aberrant from the requirement of $P_L$=0.87 μm in formula (5). Further, in a high density-digital versatile disk (HD-DVD) which has been studied for achieving a capacity of greater than 15 giga bytes (GB), the shortest mark length falls far short of the requirement in formula (5). Thus, in this case, crosstalk by neighboring tracks as well as interference between adjacent marks will increase.

As an example of a solution for reducing such ISI and/or crosstalk, a signal output from an optical detector having a multiple-division structure is appropriately operated to minimize ISI optically, instead of using the existing waveform equalizer. This means that the fundamental structure of an optical pickup is the same as that of a conventional one while the structure of an optical detector for detecting light reflected from a disk is different from that of the general one. Thus, the optical detector can perform an operation in such a way to minimize ISI generated by interference between adjacent marks and/or crosstalk.

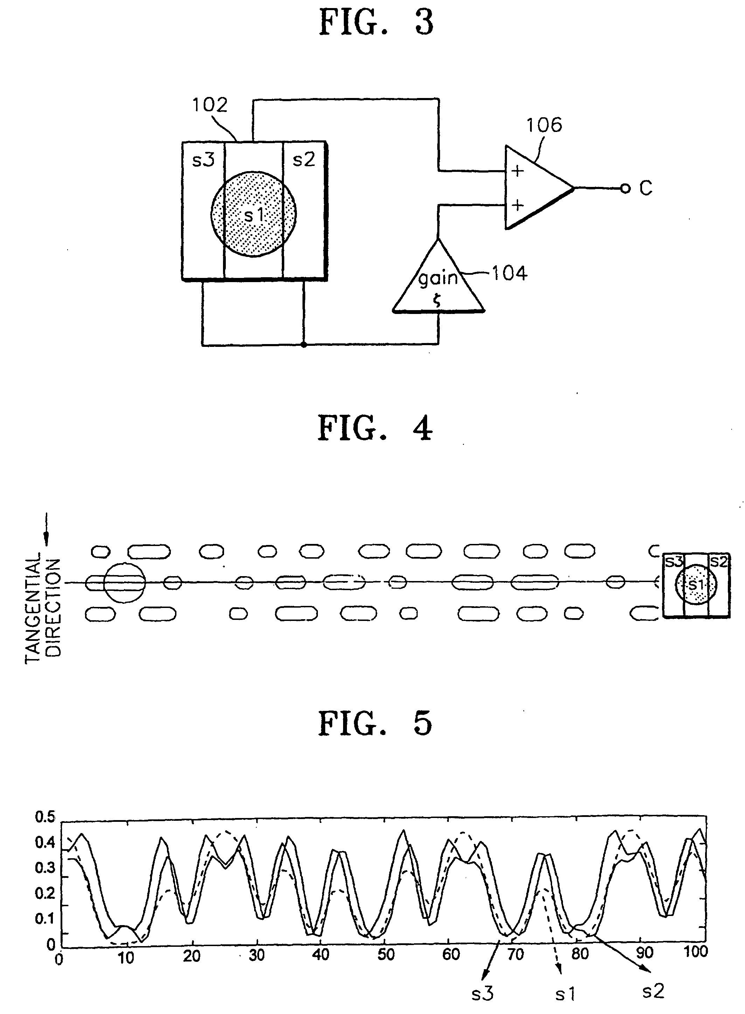

In Figure 3, which is a circuit diagram for an ISI reducing device, an optical detector 102 is divided into central and peripheral parts in the tangential direction of a disk. The optical detector 102 includes a first light-receiving unit for receiving the central part of incident light and a second light-receiving unit disposed on at least one side of the first light-receiving unit for receiving the peripheral part of the incident light independently of the first light-receiving unit. In this case, the first light-receiving unit has a predetermined size so as to include a central part within the range of about 10-90% of the incident light.

The optical detector 102 each detects the detection signal s1 of the central part and the detection signals s2 and s3 of the peripheral part. Then, after a gain controller 104 multiplies the two detection signals s2 and s3 of the peripheral part by ISI correction coefficient ξ to amplify or attenuate the peripheral detection signals, an adder 106 adds the detection signal s1 of the central part and the gain-controlled detection signals of the peripheral part to obtain an ISI corrected signal C. The gain controller 104, as an example, can serve as a multiplier. Further, the gain controller 104 and adder 106 may be denoted by a correcting unit for correcting ISI for the detection signals output from an optical detector.

For instance, if a signal is reproduced along the middle track in a disk shown in Figure 4, ISI by adjacent marks occurs. In the optical detector 102 which is divided into three sections in the tangential direction of a disk, it can be found that the detection signal s2 of the peripheral part leads the detection signal s1 of the central part in time while the detection signal s3 of the peripheral part lags the detection signal s1 of the central part. In other words, assuming that the correction signal, in which ISI is removed, output from the adder 106 is C, it is computed as follows:

$$C = s1 + ξ \cdot (s2 + s3) \tag{6}$$

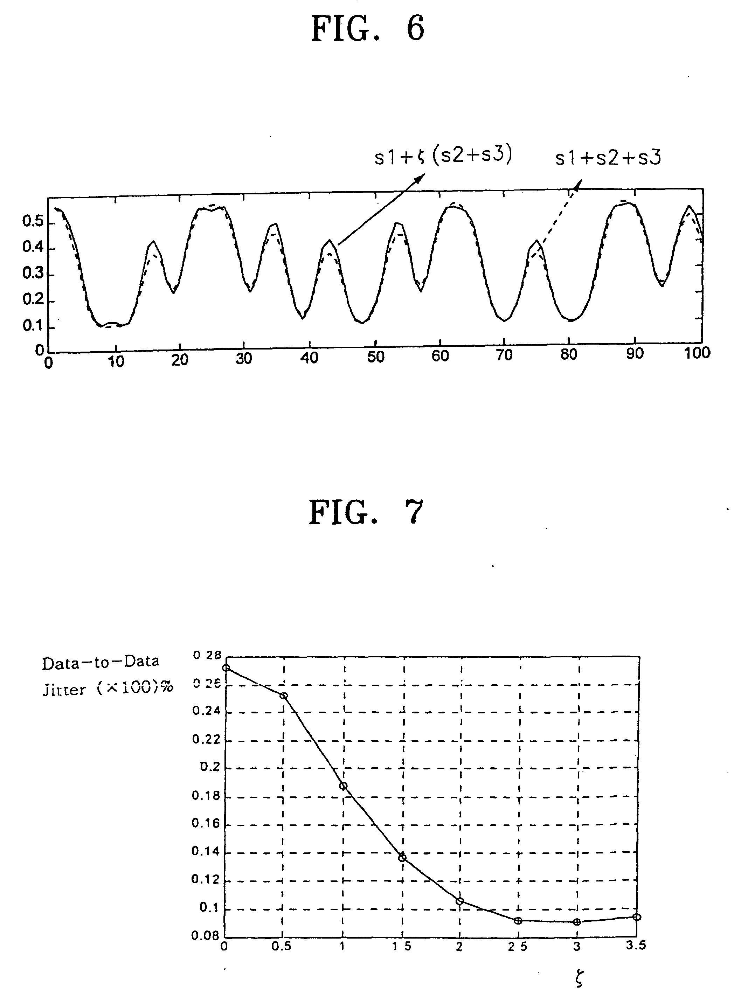

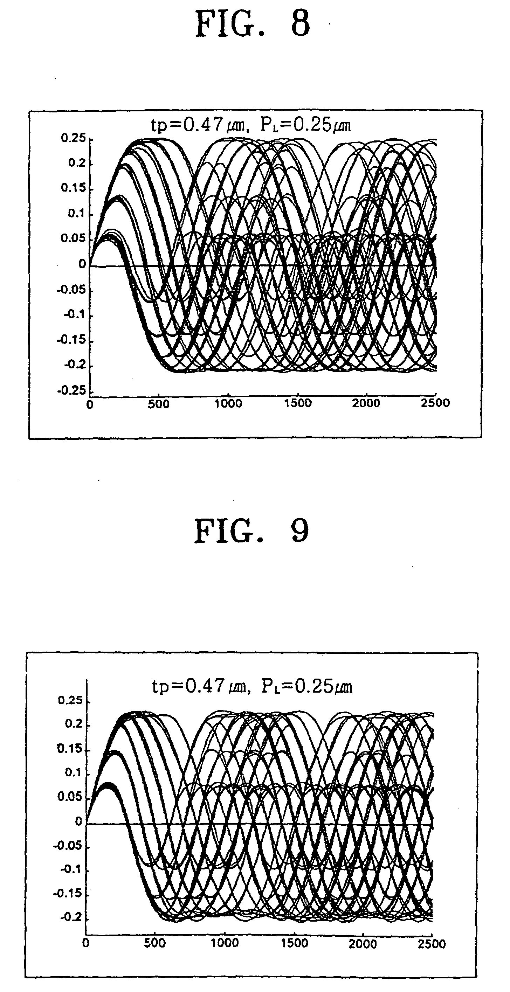

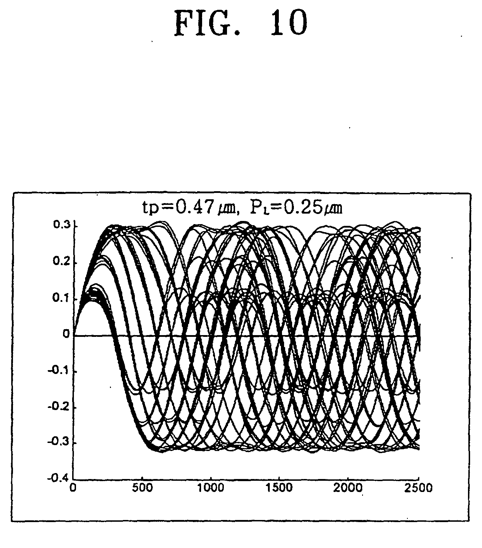

Figure 6 indicates that the modulation efficiency of the ISI removed correction signal C (s1+ξ·(s2+s3)) is improved compared to that of the detection signal (s1+s2+s3) output from the optical detector without gain-control of the detection signals s2 and s3 of the peripheral part. Figure 7 is a diagram showing jitter value for ISI correction gain coefficient ξ where the width of a central light-receiving unit is two thirds the diameter of a spot focused onto the optical detector 102. For example, jitter value is 9.09% when ξ=3, in which case the eye pattern is shown in Figure 10. Figure 8 shows the eye pattern of the detection signal s1+ s2+s3, which is output from an optical detector without being subjected to equalization by the existing equalizer and without gain controlling the detection signals s2 and s3 of the peripheral part, when a disk having a track pitch $t_p$ of 0.47 μm and the shortest mark length $P_L$ of 0.25 μm is reproduced with a light source having a wavelength 410nm and an objective lens having a NA of 0.6. Figure 9 shows the eye pattern of the signal s1+s2+s3 subjected to equalization by the existing equalizer whereas Figure 10 shows the eye pattern of an ISI correction signal s1+3s(s2+s3) which is provided from the adder 106 shown in Figure 3 without using the conventional equalizer, and which has a jitter value of 9.09% when ξ=3.

In Figure 8, the data to data jitter value before equalization of the signal s1+s2+s3 is about 18.78%, in which case ISI is large. In Figure 9, the jitter value of a signal s1+s2+s3 equalized by the existing equalizer is reduced to 8.47%, while Figure 10 shows that the jitter value of a signal, in which ISI is corrected with a multiple-division optical detector according to the present invention, is decreased to 9.09%. Therefore, it can be found that the jitter value when the existing equalizer is used is almost the same as that when no equalizer is used.

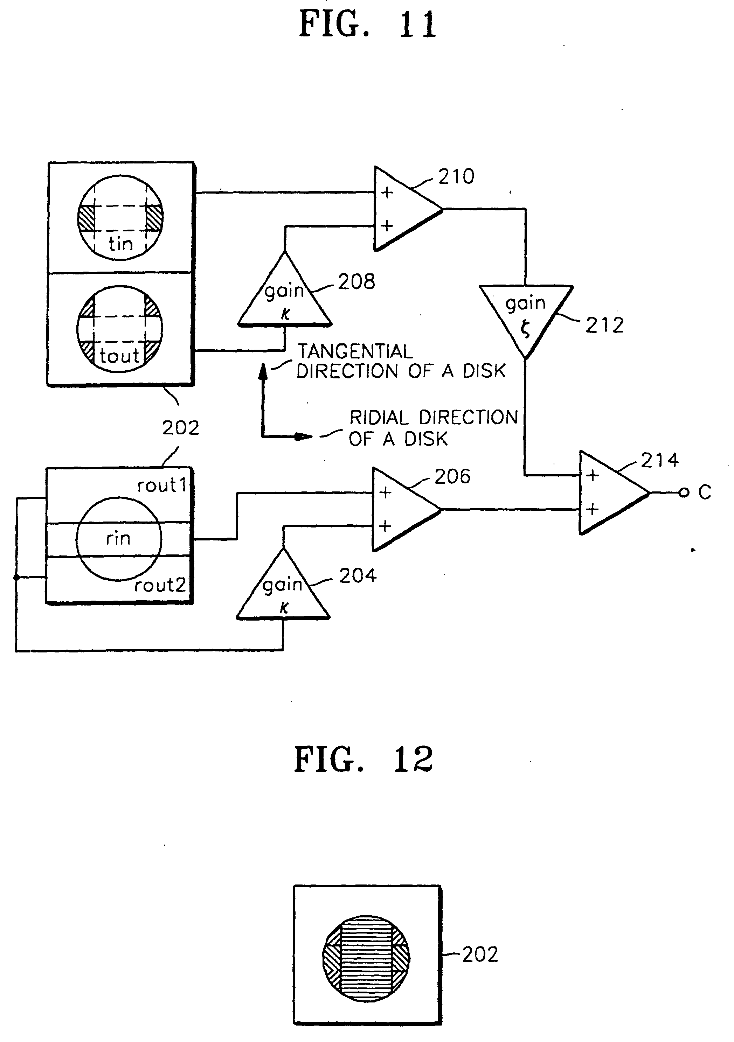

Referring to Figure 11, which is a circuit diagram of ISI and/or crosstalk reducing device according to a preferred embodiment of the present invention, optical detectors 202 have a structure for correcting crosstalk, which arises when the recording density is higher than a DVD, as well as ISI. As an example, the optical detectors 202 includes a first light-receiving unit, denoted by rin, for receiving the incident light of the central part in the radial direction, a second light-receiving unit, denoted by rout 1 and rout 2, for receiving the peripheral incident light of the radial direction, a third light-receiving unit, denoted by tin, for receiving the central incident light of the radial direction among the peripheral parts of the tangential direction, and a fourth light-receiving unit denoted by tout, for receiving the peripheral incident light of the radial direction among the peripheral parts of the tangential direction.

A hologram is used as a light-receiving unit and can be inserted into the rear side of an objective lens on which a beam is radiated, the structure of which is shown in Figure 12. In the lower optical detector 202 shown in Figure 11 for detecting the central and peripheral incident light of the radial direction, the width of the central part in the radial direction is set to be one third the diameter of a spot which is focused to the zero order through the hologram shown in Figure 12. In the upper optical detector 202 shown in Figure 11 for detecting the peripheral incident light of the tangential direction, the widths of the central parts of the tangential and radial direction are set to two thirds and one third of a radiating beam, respectively. In this case, the optical detector 202 detects a signal which is diffracted to the first order by the hologram shown in Figure 12.

Meanwhile, a first gain controller 204 controls gain by multiplying the sum (rout1+rout2) of the detection signals in the radial direction by crosstalk correction gain coefficient $\kappa$ to provide the result to a first adder 206. The first adder 206 adds the sum of the central detection signal rin of the radial direction and the gain-controlled peripheral detection signals of the radial direction to provide the result (rin+ $\kappa$ (rout1+rout2)) to a third adder 214. A second gain controller 208 multiplies the peripheral detection signal tout of the radial direction among the peripheral parts of the tangential direction by the crosstalk correction gain coefficient $\kappa$ to provide the result to a second adder 210. The second adder 210 adds the central detection signal tin of the radial direction among the peripheral parts of the tangential direction and the gain-controlled peripheral detection signals $\kappa$ (tout) of the radial direction among the peripheral parts of the tangential direction. A third gain controller 212 multiplies the addition result by ISI correction gain coefficient $\xi$. The third gain controller 212 further provides the multiplication result ($\xi$ (tin+$\kappa$·(tout)) to the third adder 214. The third adder 214 adds the output signals of the third gain controller 212 and the first adder 206 to provide a signal from which crosstalk and ISI are removed. Assuming that a signal, in which crosstalk and ISI are corrected, provided from the third adder 214 is C, C is computed as follows:

$$C = \{rin + \kappa \cdot (rout1 + rout2)\} + \xi \cdot \{tin + \kappa \cdot tout\} \qquad (7)$$

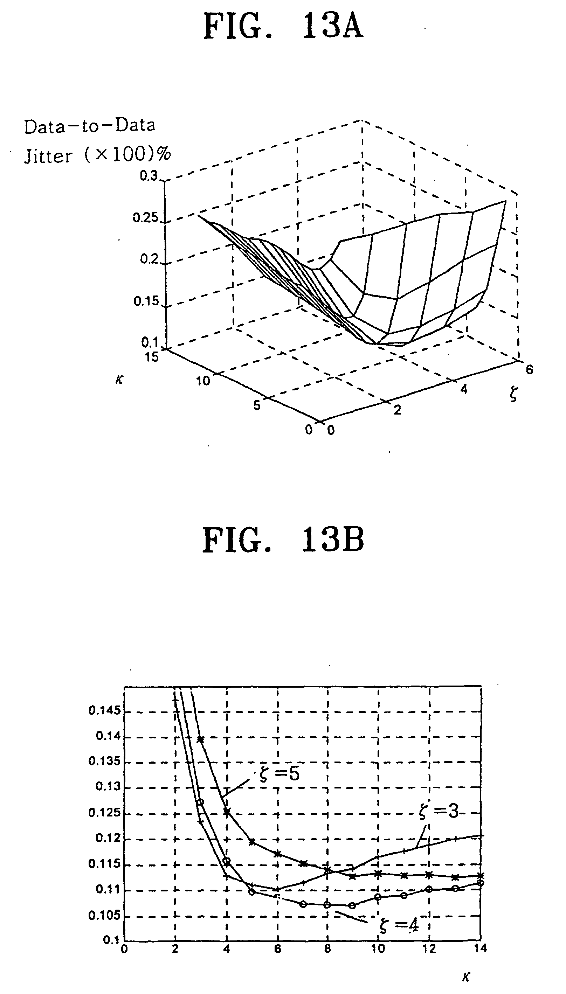

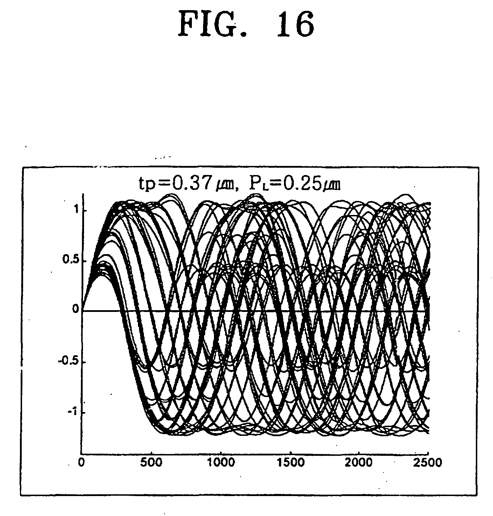

where $\kappa$ and $\xi$ are each gain coefficients for removing crosstalk and ISI. Figures. 13A and 13B are diagrams showing jitter values for ISI correction gain coefficient $\xi$ and the crosstalk correction gain coefficient $\kappa$ in three-dimensional and two-dimensional ways. As an example, when $\xi$=4 and $\kappa$=9, the jitter value is 10.71%, in which case the eye pattern is shown in Figure 16.

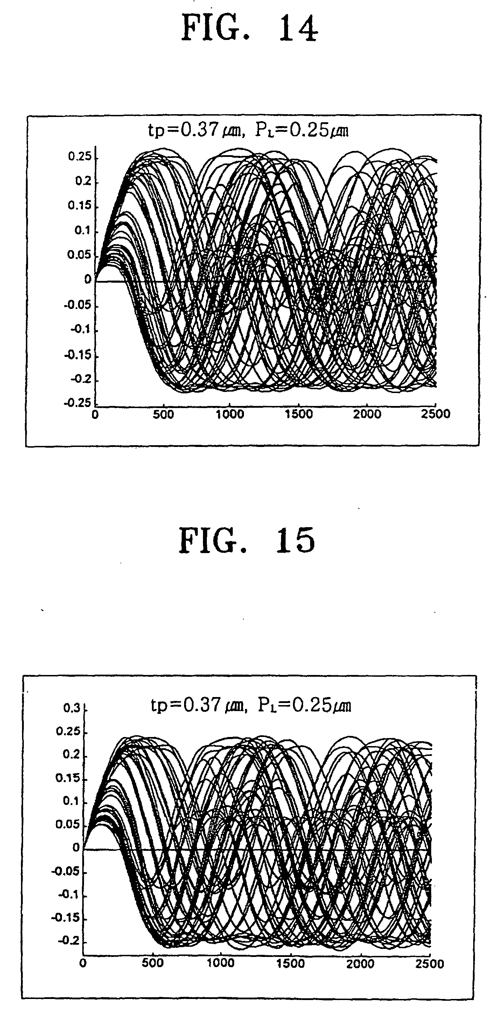

To aid in the understanding of the present invention, Figure 14 shows the simulated eye pattern of the sum signal rin+rout1+rout2 of the central and peripheral detection signals of the radial direction when a disk having a track pitch $t_p$ of 0.37 μm and the shortest mark length $P_L$ of 0.25 μm is reproduced with a light source of 410 nm wavelength and an objective lens having a NA of 0.6. In this case, the data-to data jitter value is about 27.07%, and there is a great deal of crosstalk and ISI. When the signal rin+rout1+rout2 is equalized by a conventional 3-tab equalizer, the jitter value is 16.29%, as shown in Figure 15, which demonstrates that an effect by crosstalk still remains. However, according to embodiments of the present invention, as shown in Figure 16, when a reproducing signal detected by a multiple-division optical detector is gain-controlled instead of using an equalizer, it can be seen that the jitter value is reduced to 10.71%.

In addition to detecting the central and peripheral parts of a multiple-division optical detector in the tangential and/or radial direction, respectively, as shown in Figures. 3 and 11, the present invention can include an example in which after an incident light is divided into central and peripheral parts using an optical element such as gratings, as shown in Figures. 3 and 11 to provide each of light beams diverged by the optical element to a plurality of optical detectors for photoelectrically converting them independently.

As described in the foregoing, the present invention employs the multiple-division detection signals of an optical detector instead of using the existing waveform equalizer, so that a jitter value of the same level as that obtained by using the waveform equalizer can be obtained. Further, in HD-DVD system requiring high density recording, it is possible to reduce crosstalk and ISI at the same time even when the high density recording causes crosstalk or interference between neighboring tracks.

**Claims**

1. A device for reducing crosstalk and intersymbol interference suitable for use in a recording/reproducing apparatus of an optical disk, the device comprising:

    a detector (202) for detecting an optical signal reflected from the optical disk by dividing the optical signal into the central and peripheral parts in the radial direction of the optical disk, and the central and peripheral parts in the radial direction among peripheral parts in the tangential direction to provide central and peripheral detection signals of the radial direction, and central and peripheral detection signals of the radial direction among the peripheral parts of the tangential direction; and

a correcting unit for generating a first signal by gain-controlling the peripheral detection signal of the radial direction as a first gain value to operate first gain-controlled detection signal and the central detection signal of the radial direction, generating a second signal by gain-controlling the peripheral detection signal of the radial direction among the peripheral parts of the tangential direction as the first gain value and by gain-controlling the values of operating second gain-controlled detection signal and the central detection signal of the radial direction among the peripheral parts of the tangential direction as a second gain value, and operating the first and second signals to provide a signal in which crosstalk and intersymbol interference are corrected;

wherein the correcting unit comprises a first gain controller (204) for multiplying a first gain value adjusted to minimize crosstalk by the peripheral detection signal of the radial direction to provide first gain-controlled detection signal; and

a first adder (206) for adding the first gain-controlled detection signal and the central detection signal of the radial direction to provide a first signal; and

wherein the detector (202) comprises an optical detector including a first light-receiving unit for receiving the central part of incident light, a second light-receiving unit disposed on at least one side of the first light-receiving unit for receiving the peripheral part of the incident light independently from the first light-receiving unit, a third light-receiving unit for receiving the central incident light of the radial direction among the peripheral parts of the tangential direction, a fourth light-receiving unit for receiving the peripheral incident light of the radial direction among the peripheral parts of the tangential direction.

2. The device of claim 1, wherein the first light-receiving unit has a predetermined size so as to form a central part within the range of about 10-100% of incident light.

3. The device of claim 1, wherein the detector comprises an optical element for directly transmitting the central part of incident light and diffracting the peripheral part of the incident light at a predetermined angle to divide incident light into the light of central and peripheral parts with regard to the radial direction of an optical disk and the central and peripheral light of the radial direction among the peripheral parts of the tangential direction, and a plurality of optical detectors for photoelectrically converting each of the light diverged by the optical element independently.

4. The device of claim 1, wherein the correcting unit further comprises:

a second gain controller (208) for multiplying the central detection signal of the radial direction among the peripheral parts of the tangential direction by the first gain value to provide the second gain-controlled detection signal;

a second adder (210) for adding the second gain-controlled detection signal and the peripheral detection signal of the radial direction among the peripheral parts of the tangential direction;

a third gain controller (212) for multiplying the result of the second adder (210) by a second gain value adjusted to minimize intersymbol interference to provide a second signal; and

a third adder (214) for adding the first and second signals to each other to provide a signal in which crosstalk and intersymbol interference are corrected.

5. A method of reducing crosstalk and intersymbol interference in the recording/reproducing apparatus of an optical disk, the method comprising the steps of:

(a) detecting by dividing an optical signal reflected from the optical disk into central and peripheral parts in the radial direction of the optical disk, and central and peripheral parts of the radial direction among the peripheral parts of the tangential direction to provide central and peripheral detection signals of the radial direction, and central and peripheral detection signals of the radial direction among the peripheral parts of the tangential direction; and

(b) generating a first signal by controlling the peripheral detection signal of the radial direction as a first gain value to operate the gain-controlled detection signal and the central detection signal of the radial direction, generating a second signal by controlling the peripheral detection signal of the radial direction among the peripheral parts of the tangential direction as the first gain value and by gain-controlling the value of operating the gain-controlled detection signal of the radial direction among the peripheral parts of the tangential direction and the central detection signal of the radial direction among the peripheral parts of the tangential direction as a second gain value, and operating the first and second signals to provide a signal in which crosstalk and intersymbol interference are corrected,

wherein the first gain value is adjusted to minimize crosstalk caused by neighboring tracks, and the second gain value is adjusted to minimize intersymbol interference by adjacent marks, and wherein step (b) comprises the steps of:

(b1) multiplying the peripheral detection signal of the radial direction by a first gain value adjusted to minimize crosstalk to provide first gain-controlled detection signal;

(b2) adding the first gain-controlled detection signal and the central detection signal of the radial direction to provide a first signal.

6. The method of claim 5, wherein the step (b) further comprises the steps of:

(b3) multiplying the central detection signal of the radial direction among the peripheral parts of the tangential direction by the first gain value to provide second gain-controlled detection signal;

(b4) adding the second gain-controlled detection signal and the peripheral detection signal among the peripheral parts of the tangential direction to provide addition result;

(b5) multiplying the addition result by a second gain value adjusted to minimize intersymbol interference to provide a second signal; and

(b6) adding the first and second signal to each other.

**Patentansprüche**

1. Vorrichtung zur Reduzierung von Übersprechen und Nachbarsymbolinterferenz, die zur Verwendung in einer Aufzeichnungs-/Wiedergabevorrichtung einer optischen Platte geeignet ist, wobei die Vorrichtung Folgendes umfasst:

- einen Detektor (202) zum Erfassen eines optischen Signals, das von der optischen Platte reflektiert wird, indem das optische Signal in die zentralen und peripheren Teile in der radialen Richtung der optischen Platte und die zentralen und peripheren Teile in der radialen Richtung zwischen peripheren Teilen in der tangentialen Richtung aufgeteilt wird, um zentrale und periphere Erfassungssignale der radialen Richtung und zentrale und periphere Erfassungssignale der radialen Richtung zwischen den peripheren Teilen der tangentialen Richtung bereitzustellen; und

- eine Korrektureinheit zum Erzeugen eines ersten Signals durch Verstärkungsregelung des peripheren Erfassungssignals der radialen Richtung als einen ersten Verstärkungswert zum Steuern des ersten verstärkungsgeregelten Erfassungssignats und des zentralen Erfassungssignals der radialen Richtung, zum Erzeugen eines zweiten Signals durch Verstärkungsregelung des peripheren Erfassungssignals der radialen Richtung zwischen den peripheren Teilen der tangentialen Richtung als den ersten Verstärkungswert und durch Verstärkungsregelung der Werte des Steuerns des zweiten verstärkungsgeregelten Erfassungssignals und des zentralen Erfassungssignals der radialen Richtung zwischen den peripheren Teilen der tangentialen Richtung als einen zweiten Verstärkungswert und Steuern der ersten und zweiten Signale, um ein Signal bereitzustellen, in dem Übersprechen und Nachbarsymbolinterferenz korrigiert werden;

- wobei die Korrektureinheit einen ersten Verstärkungsregler (204) zum Vervielfachen eines ersten Verstärkungswerts umfasst, der angepasst ist, ein Übersprechen durch das periphere Erfassungssignal der radialen Richtung zu minimieren, um ein erstes verstärkungsgeregeltes Erfassungssignal bereitzustellen; und

- eine erste Addiereinrichtung (206) zum Addieren des ersten verstärkungsgeregelten Erfassungssignals und des zentralen Erfassungssignals der radialen Richtung, um ein erstes Signal bereitzustellen; und

- wobei der Detektor (202) einen optischen Detektor mit einer ersten lichtaufnehmenden Einheit zum Aufnehmen des zentralen Teils des einfallenden Lichts, eine zweite lichtaufnehmende Einheit, die wenigstens an einer Seite der ersten lichtaufnehmenden Einheit angebracht ist, um den peripheren Teil des einfallenden Lichts unabhängig von der ersten lichtaufnehmenden Einheit aufzunehmen, eine dritte lichtaufnehmende Einheit zum Aufnehmen des zentralen einfallenden Lichts der radialen Richtung zwischen den peripheren Teilen der tangentialen Richtung und eine vierte lichtaufnehmende Einheit zum Aufnehmen des peripheren einfallenden Lichts der radialen Richtung zwischen den peripheren Teilen der tangentialen Richtung umfasst.

2. Vorrichtung nach Anspruch 1, wobei die erste lichtaufnehmende Einheit eine vorbestimmte Größe hat, um einen zentralen Teil in dem Bereich von etwa 10 bis 100 % des einfallenden Lichts zu bilden.

3. Vorrichtung nach Anspruch 1, wobei der Detektor ein optisches Element zum direkten Übertragen des zentralen Teils des einfallenden Lichts und Beugen des peripheren Teils des einfallenden Lichts mit einem vorbestimmten Winkel umfasst, um einfallendes Licht in das Licht zentraler und peripherer Teile im Bezug auf die radiale Richtung einer optischen Platte und das zentrale und periphere Licht der radialen Richtung zwischen den peripheren Teilen der tangentialen Richtung aufzuteilen, und eine Vielzahl von optischen Detektoren zum fotoelektrischen Umwandeln jeden Lichts umfasst, das von dem optischen Element unabhängig gestreut wird.

4. Vorrichtung nach Anspruch 1, wobei die Korrektureinheit außerdem Folgendes umfasst:

- einen zweiten Verstärkungsregler (208) zum Vervielfältigen des zentralen Erfassungssignals der radialen Richtung zwischen den peripheren Teilen der tangentialen Richtung durch den ersten Verstärkungswert, um das zweite verstärkungsgeregelte Erfassungssignal bereitzustellen;

- eine zweite Addiereinrichtung (210) zum Addieren des zweiten verstärkungsgeregelten Erfassungssignals und des peripheren Erfassungssignals der radialen Richtung zwischen den peripheren Teilen der tangentialen Richtung;

- einen dritten Verstärkungsregler (212) zum Vervielfältigen des Ergebnisses der zweiten Addiereinrichtung (210) durch einen zweiten Verstärkungswert, der zum Minimieren von Nachbarsymbolinterferenz angepasst wurde, um ein zweites Signal bereitzustellen; und

- eine dritte Addiereinrichtung (214), um die ersten und zweiten Signale zueinander zu addieren, um ein Signal bereitzustellen, in dem Übersprechen und Nachbarsymbolinterferenz korrigiert werden.

5. Verfahren zur Reduzierung von Übersprechen und Nachbarsymbolinterferenz in der Aufzeichnungs-/Wiedergabevorrichtung einer optischen Platte, wobei das Verfahren die folgenden Schritte umfasst:

(a) Erfassen durch Aufteilen eines von der optischen Platte reflektierten optischen Signals in zentrale und periphere Teile in der radialen Richtung der optischen Platte und zentrale und periphere Teile der radialen Richtung zwischen den peripheren Teilen der tangentialen Richtung, um zentrale und periphere Erfassungssignale der radialen Richtung und zentrale und periphere Erfassungssignale der radialen Richtung zwischen den peripheren Teilen der tangentialen Richtung bereitzustellen; und

(b) Erzeugen eines ersten Signals durch Regelung des peripheren Erfassungssignals der radialen Richtung als einen ersten Verstärkungswert zum Steuern des verstärkungsgeregelten Erfassungssignals und des zentralen Erfassungssignals der radialen Richtung, Erzeugen eines zweiten Signals durch Regelung des peripheren Erfassungssignals der radialen Richtung zwischen den peripheren Teilen der tangentialen Richtung als den ersten Verstärkungswert und durch Verstärkungsregelung des Wertes des Steuerns des verstärkungsgeregelten Erfassungssignals der radialen Richtung zwischen den peripheren Teilen der tangentialen Richtung und des zentralen Erfassungssignals der radialen Richtung zwischen den peripheren Teilen der tangentialen Richtung als einen zweiten Verstärkungswert und Steuern der ersten und zweiten Signale, um ein Signal bereitzustellen, in dem Übersprechen und Nachbarsymbolinterferenz korrigiert werden;

wobei der erste Verstärkungswert zum Minimieren von Übersprechen, das von benachbarten Spuren verursacht wird, angepasst ist und der zweite Verstärkungswert zum Minimieren von Nachbarsymbolinterferenz durch angrenzende Markierungen angepasst ist, wobei Schritt (b) die folgenden Schritte umfasst:

(b1) Vervielfältigen des peripheren Erfassungssignals der radialen Richtung durch einen ersten Verstärkungswert, der zum Minimieren von Übersprechen angepasst ist, um ein erstes verstärkungsgeregeltes Erfassungssignal bereitzustellen;

(b2) Addieren des ersten verstärkungsgeregelten Erfassungssignals und des zentralen Erfassungssignals der radialen Richtung, um ein erstes Signal bereitzustellen.

6. Verfahren nach Anspruch 5, wobei Schritt (b) darüber hinaus folgende Schritte umfasst:

(b3) Vervielfältigen des zentralen Erfassungssignals der radialen Richtung zwischen den peripheren Teilen der tangentialen Richtung durch den ersten Verstärkungswert, um das zweite verstärkungsgeregelte Erfassungssignal bereitzustellen;

(b4) Addieren des zweiten verstärkungsgeregelten Erfassungssignals und des peripheren Erfassungssignals zwischen den peripheren Teilen der tangentialen Richtung, um das Additionsergebnis bereitzustellen;

(b5) Vervielfältigen des Additionsergebnisses durch einen zweiten Verstärkungswert, der zum Minimieren von Nachbarsymbolinterferenz angepasst ist, um ein zweites Signal bereitzustellen; und

(b6) Addieren des ersten und zweiten Signals zueinander.

**Revendications**

1. Dispositif pour réduire la diaphonie et le brouillage entre symboles, utilisable dans un appareil d'enregistrement/ lecture de disque optique, le dispositif comprenant :

un détecteur (202) pour détecter un signal optique réfléchi par le disque optique en divisant le signal optique en parties centrale et périphérique dans la direction radiale du disque optique, et les parties centrale et périphérique dans la direction radiale parmi des parties périphériques dans la direction tangentielle pour produire des signaux de détection central et périphérique de la direction radiale, et des signaux de. détection central et périphérique de la direction radiale parmi les parties périphériques de la direction tangentielle ; et
une unité de correction pour générer un premier signal par commande de gain du signal de détection périphérique de la direction radiale comme première valeur de gain pour exploiter le premier signal de détection à commande de gain et le signal de détection central de la direction radiale, générer un deuxième signal par commande de gain du signal de détection périphérique de la direction radiale parmi les parties périphériques de la direction tangentielle comme première valeur de gain et par commande de gain des valeurs d'exploitation du deuxième signal de détection à commande de gain et du signal de détection central de la direction radiale parmi les parties périphériques de la direction tangentielle comme seconde valeur de gain, et exploiter les premier et deuxième signaux pour produire un signal dans lequel la diaphonie et le brouillage entre symboles soient corrigés ;
l'unité de correction étant constituée par un premier dispositif de commande de gain (204) pour multiplier une première valeur de gain réglée pour limiter la diaphonie par le signal de détection périphérique de la direction radiale afin de produire un premier signal de détection à commande de gain ; et
un premier additionneur (206) pour additionner le premier signal de détection à commande de gain et le signal de détection central de la direction radiale afin de produire un premier signal ; et
le détecteur (202) étant constitué par un détecteur optique comportant un premier dispositif photorécepteur pour recevoir la partie centrale de la lumière incidente, un deuxième dispositif photorécepteur disposé sur au moins un côté du premier dispositif photorécepteur pour recevoir la partie périphérique de la lumière incidente indépendamment du premier dispositif photorécepteur, un troisième dispositif photorécepteur pour recevoir la lumière incidente centrale de la direction radiale parmi les parties périphériques de la direction tangentielle, un quatrième dispositif photorécepteur pour recevoir la lumière incidente périphérique de la direction radiale parmi les parties périphériques de la direction tangentielle.

**2.** Dispositif selon la revendication 1, dans lequel le premier dispositif photorécepteur a des dimensions prédéterminées de manière à former une partie centrale occupant environ entre 10 et 100% de la lumière incidente.

**3.** Dispositif selon la revendication 1, dans lequel le détecteur est constitué par un élément optique pour transmettre directement la partie centrale de la lumière incidente et diffracter la partie périphérique de la lumière incidente suivant un angle prédéterminé afin de diviser la lumière incidente en lumière des parties centrale et périphérique en fonction de la direction radiale d'un disque optique et la lumière centrale et périphérique de la direction radiale parmi les parties périphériques de la direction tangentielle, et par une pluralité de détecteurs optiques pour la conversion photoélectrique indépendante de chaque lumière amenée à diverger par l'élément optique.

**4.** Dispositif selon la revendication 1, dans lequel l'unité de correction comporte en outre :

un deuxième dispositif de commande de gain (208) pour multiplier par la première valeur de gain le signal de détection central de la direction radiale parmi les parties périphériques de la direction tangentielle afin de produire le deuxième signal de détection à commande de gain ;
un deuxième additionneur (210) pour additionner le deuxième signal de détection à commande de gain et le signal de détection périphérique de la direction radiale parmi les parties périphériques de la direction tangentielle ;
un troisième dispositif de commande de gain (212) pour multiplier le résultat du deuxième additionneur (210) par une deuxième valeur de gain réglée pour limiter le brouillage entre symboles afin de produire un deuxième signal ; et
un troisième additionneur (214) pour additionner les premier et deuxième signaux l'un avec l'autre afin de produire un signal dans lequel la diaphonie et le brouillage entre symboles soient corrigés.

**5.** Procédé de réduction de la diaphonie et du brouillage entre symboles dans l'appareil d'enregistrement/lecture d'un disque optique, le procédé comprenant les étapes consistant à :

(a) détecter en divisant un signal optique réfléchi par le disque optique en parties centrale et périphérique dans la direction radiale du disque optique, et en parties centrale et périphérique de la direction radiale parmi les parties périphériques de la direction tangentielle pour produire des signaux de détection central et périphérique de la direction radiale, et des signaux de détection central et périphérique de la direction radiale parmi les parties périphériques de la direction tangentielle ; et
(b) générer un premier signal en commandant le signal de détection périphérique de la direction radiale comme première valeur de gain pour exploiter le signal de détection à commande de gain et le signal de détection central de la direction radiale, générer un deuxième signal en commandant le signal de détection périphérique de la direction radiale parmi les parties périphériques de la direction tangentielle comme première valeur de gain et en commandant le gain de la valeur d'exploitation du signal de détection à commande de gain de la direction radiale parmi les parties périphériques de la direction tangentielle comme seconde valeur de gain, et exploiter les premier et deuxième signaux pour produire un signal dans lequel la diaphonie et le brouillage entre symboles soient corrigés,

la première valeur de gain étant réglée pour limiter la diaphonie provoquée par des pistes voisines, et la deuxième valeur de gain étant réglée pour limiter le brouillage entre symboles par des marques adjacentes, et l'étape (b) comportant les étapes consistant à :

(b1) multiplier le signal de détection périphérique de la direction radiale par une première valeur de gain réglée pour limiter la diaphonie afin de produire un premier signal de détection à commande de gain ;
(b2) additionner le premier signal de détection à commande de gain et le signal de détection central de la direction radiale pour produire un premier signal.

**6.** Procédé selon la revendication 5, dans lequel l'étape (b) comporte en outre les étapes consistant à :

(b3) multiplier le signal de détection central de la direction radiale parmi les parties périphériques de la direction tangentielle par la première valeur de gain pour produire un deuxième signal de détection à commande de gain ;
(b4) additionner le deuxième signal de détection à commande de gain et le signal de détection périphérique parmi les parties périphériques de la direction tangentielle pour produire un résultat d'addition ;
(b5) multiplier le résultat de l'addition par une deuxième valeur de gain réglée pour limiter le brouillage entre symboles afin de produire un deuxième signal ; et
(b6) additionner les premier et deuxième signaux l'un avec l'autre.

# FIG. 1 (PRIOR ART)

INPUT x(t)

16 DELAY CIRCUIT $\tau$

18 DELAY CIRCUIT $\tau$

c ATTENUATOR —12

c ATTENUATOR — 20

INVERTER —14

INVERTER — 22

24 ADDER

OUTPUT g(t)

# FIG. 2A

$\tau$ $\tau$

$x(t-\tau)$

$-cx(t)$

$-cx(t-2\tau)$

# FIG. 2B

g(t)

ISI=0 AT ADJACENT SIGNAL POSITION

# FIG. 3

# FIG. 4

# FIG. 5

# FIG. 6

s1+ζ(s2+s3)          s1+s2+s3

# FIG. 7

Data-to-Data
Jitter (×100)%

ζ

# FIG. 8

tp=0.47 μm, P$_L$=0.25μm

# FIG. 9

tp=0.47 μm, P$_L$=0.25μm

# FIG. 10

tp=0.47μm, P$_L$=0.25μm

# FIG. 11

TANGENTIAL
DIRECTION OF A DISK

RIDIAL DIRECTION
OF A DISK

# FIG. 12

# FIG. 13A

# FIG. 13B

# FIG. 14

tp=0.37 μm, P_L=0.25μm

# FIG. 15

tp=0.37 μm, P_L=0.25μm

# FIG. 16

tp=0.37 μm, P$_L$=0.25 μm